# EUROPEAN PATENT SPECIFICATION

(11) **EP 1 356 959 B1**
(45) Date of publication and mention of the grant of the patent: **08.03.2006**
(21) Application number: 02009016.3
(22) Date of filing: 23.04.2002
(51) Int. Cl.: B60C 19/00, B60C 11/03, G01M 7/02, B60C 11/00

(54) **Tyre**
Reifen
Bandage pneumatique

(43) Date of publication of application: 29.10.2003
(73) Proprietor: Ford Global Technologies, Inc., Dearborn, Michigan 48126-2490 (US)
(72) Inventor: Magnusson, Stefan, 518 41 Sjömarken (SE); Larsson, Royne, 504 96 Bredared (SE)
(74) Representative: Hammond, Andrew David

(56) References cited:
- PATENT ABSTRACTS OF JAPAN vol. 1999, no. 13, 30 November 1999 (1999-11-30) -& JP 11 208220 A (BRIDGESTONE CORP), 3 August 1999 (1999-08-03)

## Description

### Technical field

The present patent application relates to a tyre in accordance with the preamble of claim 1. Particularly, the patent application relates to a tyre comprising a circumferential tread portion having a first radial tread height.

### Background of the invention

Motor vehicle manufacturers aim to eliminate rattles, squeaks and other undesired noises which might occur when a vehicle is in use. However, since these noises only occur when the vehicle is subjected to the vibrations occurring in use, it can be difficult to track down and correct the source of such noises.

A number of different simulation systems have been developed to allow identification of noises on a test bed. Roller tests in which the stationary car has its wheel driven on sets of rollers, which have different surface texture and where the car can be subjected to different frequencies of vibration by changing the rotational speed of the rollers as well as test beds where the vehicle is supported on its wheels and a vibration generator is utilized for vibrating the wheel supporting means with a controlled frequency, are previously known. The purpose of such test beds is to determine the frequency at which a vibration induced noise occurs and utilise this information for determining the most probable cause of the noise. One such test bed system, where the cause of the noise is determined through comparing such frequency information with previously identified causes of noise at the determined frequency is previously known through EP 0 671 620.

However, as a result of the complex nature of such test beds and consequently the substantial cost associated therewith, only a limited number of vehicle dealerships and repair shops are able to provide for such testing, causing time delays and high expenses for vehicle customers and dealers/vehicle manufacturers in resolving noise problems.

From JP-A-11208220 is known a pneumatic tire for ensuring a certain surface contact area without changing the groove volume. This is achieved by making it more difficult for certain small blocks of the thread to collapse. A larger thread block is sectioned into four small blocks by sipes that extend in the cross-direction of the tire. One of the small blocks is formed 0.1-1.5 millimetres lower than the other small blocks. The block that contacts the road surface receives shearing force from friction with the running surface in the direction opposite to the direction in which the vehicle is advancing due to friction with the road surface. The contact pressure of the lower small block is reduced because the lower small block is formed lower than the other small blocks. The amount of the reduced load from the lower small block is thus added onto the other small blocks and the shearing force is reduced only with respect to the lower small block. Therefore, the lower small block does not collapse because it receives a smaller shearing force compared with the other small blocks. As a result, contact surface area can be ensured.

### Summary of the invention

One object of the invention is to provide a dealership tester or repair shop test staff affordable and simple means to aid in identification of probable sources of vibration induced noises on vehicles. This object is achieved by means of a tyre in accordance with claim 1.

Preferred embodiments are listed in the dependent claims.

### Description of drawings

In the following, the invention will be described in greater detail with reference to attached drawings, in which
Fig. 1 is a schematic illustration of a tyre according to a first embodiment of the invention,
Fig. 2 is a schematic illustration of the geometry of the recessed regions of the tyre according to fig. 1.

### Description of embodiments

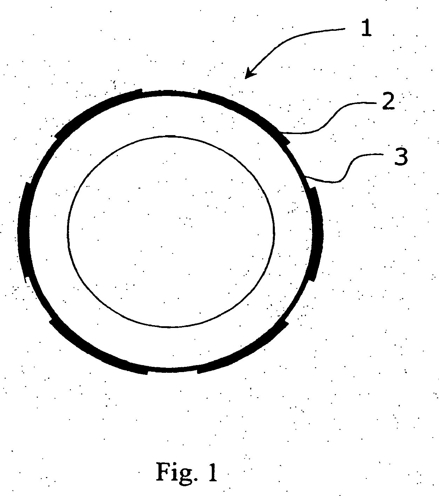

Fig. 1 shows a simplified side view of a tyre 1. In a preferred embodiment of the invention, the tyre 1 is constituted of a conventional re-treaded tyre. A circumferential tread portion 2 having a first radial tread height is fitted to the tyre 1. The tread is of conventional type and normally comprise a tread pattern (not shown), which is arranged for normal running on a road surface.

In order to ensure that the tyre generates vibrations at appropriate frequencies when the vehicle drives slowly, the tread portion 2 is provided with a plurality of recessed regions 3 having a second lower radial tread height. The recessed regions 3 extend laterally across the tread portion 2. Note that the radial difference in tread height is exaggerated in fig. 1 in order to clearly illustrate the recessed regions.

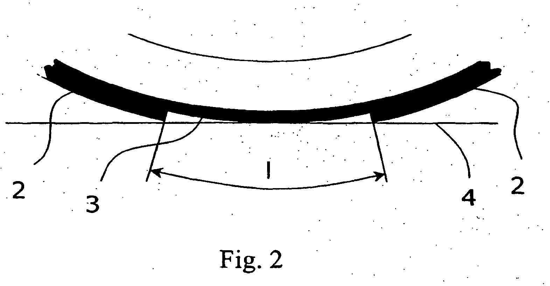

Fig. 2 shows a partial side view of the tyre 1 and especially the geometry of a recessed region 3. In one embodiment of the invention, the recessed regions 3 do not comprise a tread pattern while the circumferential thread portion 2 having the first radial tread height comprise a tread pattern.

As shown in fig. 2, in a preferred embodiment of the invention, the length I in the circumferential direction of each of the recessed regions 3 are at least such that the tyre 1 can be rotated around its axis to ground contact on a plane surface 4 with a point of contact on the tread of a recessed region 3.

In one embodiment of the invention, the recessed regions 3 are symmetrically disposed around the perimeter of the tyre 1. In this case, the tyre 1 has six recessed regions 3, but it is also conceivable to arrange any number of recessed regions 3 around the perimeter of the tyre 1, although the number should lie between four and eight for the size of tyres normally used on ordinary cars in order to generate frequencies in a range between 0 and 40Hz useful for detection of vibration induced noises on vehicles.

By means of measuring the velocity of the vehicle when a noise is identified, it is possible to approximate the frequency generated by the tyre 1 and thereby to identify a probable source of the noise induced sound. In case the source of the sound is readily determinable to the tester, appropriate corrective measures can be undertaken immediately. This means that the time and effort for eliminating such a noise can be minimized.

It is possible to approximate the frequency generated by the tyre 1 when causing the noise using only the velocity of the vehicle as reference. The frequency can then be calculated using the following equation: f [Hz]= (v × n) / (c × 3.6) where: v is the velocity expressed in [km/h]; n is the number of recessed regions [integer]; c is the mean circumference of the tyre [m]. In case of a vehicle only having means for presenting the velocity in miles per hour, the equation need only be modified as follows: f[Hz]= (v × n) / (c × 2.24) where: v is the velocity expressed in [mph]; n is the number of recessed regions [integer]; c is the mean circumference of the tyre [m].

Furthermore, it is possible to build up a set of stored data which will indicate that, for example, when a noise occurs at a certain velocity it is likely to result from a certain vehicle component. In this way the tester is able to directly identify what parts of the vehicle he should check to try to counter the noise. Accordingly, the velocity at which the noise begins to occur can be noted, and the velocity at which the noise stops occurring can be noted and this information can be compared with stored data for the particular type of vehicle being tested and used to identify a probable source of the noise.

In a preferred embodiment, the circumference of the tyre 1 is about 1925 mm, and the tread portions 2 between the recessed regions 3 have a length in the circumferential direction of approximately 220 mm and the recessed regions 3 have a length in the circumferential direction of approximately 110 mm the radial height difference between the tread portions 2 having the first radial tread height and the recessed regions 3 having the second lower radial tread height being about 6 mm.

In a further embodiment of the invention, the tread portions 2 between the recessed regions 3 have a length in the circumferential direction being approximately twice the length of the recessed regions 3 in the circumferential direction.

In order to detect vibration induced noises, the vehicle, with at least one tyre 1 according to the invention mounted thereto, is driven through a range of predetermined reference velocities, whereupon the tyre causes the vehicle to be vibrated at a range of different frequencies. During testing the vehicle can be driven at low and moderate speeds in any way well known to the skilled person, without jeopardizing the safety of the driver. An appropriate range of velocities lie between 0-40 km/h or 0-25 mph.

Preferably, two tyres 1 are utilised, wherein the two tyres 1 alternative are mounted on a front or rear axle of the vehicle. Accordingly, the tyres can be mounted to a front or rear axle of the vehicle, as counted in the normal travelling direction of the vehicle, wherein a first test is performed with the tyres mounted to the front axle and a second with the tyres mounted to the rear axle. In order to accomplish vibration of the whole vehicle at the same time, the motor vehicle can be provided with tyres for generating vibration induced noises on all axles.

The invention is not limited to the above-described embodiments, but may be varied within the scope of the following claims.

## Claims

1. A tyre (1) comprising a circumferential tread portion (2) having a first radial tread height, where the tread portion (2) further is provided with a plurality of recessed regions (3) having a second lower radial tread height, which recessed regions (3) extend laterally across the tread portion (2) and have a length in the circumferential direction at least such that the tyre (1) can be rotated around its axis to ground contact on a plane surface (4) with a point of contact on the tread of a recessed region (3), **characterised in that** the radial height difference between the first radial tread height and the second lower radial tread height is in the range of 5-10 mm.

2. A tyre (1) according to claim 1,
**characterised in that** the recessed regions (3) are symmetrically disposed around the perimeter of the tyre (1).

3. A tyre (1) according to any one of claims 1 or 2,
**characterised in that** the tyre (1) has six recessed regions (3).

4. A tyre (1) according to any one of claims 1 or 2,
**characterised in that** the tyre (1) has between four and eight recessed regions (3).

5. A tyre (1) according to any one of claims 2 or 3,
**characterised in that** the circumference of the tyre (1) is about 1925 mm, and that the tread portions (2) between the recessed regions have a length in the circumferential direction being approximately 220 mm and that the recessed regions (3) have a length in the circumferential direction being approximately 110 mm the radial height difference between the first radial tread height and the second lower radial tread height being about 6 mm.

6. A tyre (1) according to any one of claims 1-5,
**characterised in that** the tread portions (2) between the recessed regions (3) have a length in the circumferential direction being approximately twice the length of the recessed regions (3) in the circumferential direction.

7. A tyre (1) according to any one of claims 1-6,
**characterised in that** the recessed regions (3) does not comprise a tread pattern while the circumferential tread portion (2) having the first radial tread height comprise a tread pattern.

## Patentansprüche

1. Reifen (1), der einen Umfangsprofilabschnitt (2) mit einer ersten radialen Profilhöhe umfasst, wobei der Profilabschnitt (2) ferner mit mehreren ausgesparten Bereichen (3) versehen ist, die eine zweite niedrigere radiale Profilhöhe besitzen, wobei sich die ausgesparten Bereiche (3) seitlich über den Profilabschnitt (2) erstrecken und in Umfangsrichtung eine Länge besitzen, die wenigstens derart ist, dass der Reifen (1) auf einer ebenen Oberfläche (4) um seine Achse in einen Bodenkontakt mit einem Kontaktpunkt des Profils eines ausgesparten Bereichs (3) gedreht werden kann, **dadurch gekennzeichnet, dass** die radiale Höhendifferenz zwischen der ersten radialen Profilhöhe und der zweiten niedrigeren radialen Profilhöhe im Bereich von 5 bis 10 mm liegt.

2. Reifen (1) nach Anspruch 1,
**dadurch gekennzeichnet, dass** die ausgesparten Bereiche (3) symmetrisch um den Umfang des Reifens (1) angeordnet sind.

3. Reifen (1) nach einem der Ansprüche 1 oder 2,
**dadurch gekennzeichnet, dass** der Reifen (1) sechs ausgesparte Bereiche (3) besitzt.

4. Reifen (1) nach einem der Ansprüche 1 oder 2,
**dadurch gekennzeichnet, dass** der Reifen (1) zwischen vier und acht ausgesparte Bereiche (3) besitzt.

5. Reifen (1) nach einem der Ansprüche 2 oder 3,
**dadurch gekennzeichnet, dass** der Umfang des Reifens (1) etwa 1925 mm beträgt und dass die Profilabschnitte (2) zwischen den ausgesparten Bereichen eine Länge in Umfangsrichtung besitzen, die etwa 220 mm beträgt, und dass die ausgesparten Bereiche (3) eine Länge in Umfangsrichtung besitzen, die etwa 110 mm beträgt, wobei die radiale Höhendifferenz zwischen der ersten radialen Profilhöhe und der zweiten niedrigeren radialen Profilhöhe etwa 6 mm beträgt.

6. Reifen nach einem der Ansprüche 1-5,
**dadurch gekennzeichnet, dass** die Profilabschnitte (2) zwischen den ausgesparten Bereichen (3) eine Länge in Umfangsrichtung besitzen, die etwa gleich der doppelten Länge der ausgesparten Bereiche (3) in Umfangsrichtung ist.

7. Reifen (1) nach einem der Ansprüche 1-6,
**dadurch gekennzeichnet, dass** die ausgesparten Bereiche (3) kein Profilmuster aufweisen, während der Umfangsprofilabschnitt (2) mit der ersten radialen Profilhöhe ein Profilmuster aufweist.

## Revendications

1. Pneumatique (1) comportant une partie de bande roulement circonférentielle (2) ayant une première hauteur de bande de roulement radiale, où la partie de bande de roulement (2) est en outre munie d'une pluralité de zones évidées (3) ayant une seconde hauteur de bande roulement radiale inférieure, lesquelles zones évidées (3) s'étendent latéralement à travers la partie de bande de roulement (2), et ont une longueur dans la direction circonférentielle au moins telle que le pneumatique (1) peut être tourné autour de son axe pour venir en contact avec le sol sur une surface plane (4) avec un point de contact sur la bande de roulement d'une zone évidée (3),
**caractérisé en ce que** la différence de hauteur radiale entre la première hauteur de bande de roulement radiale et la seconde hauteur de bande de roulement radiale est dans la plage de 5 à 10 mm.

2. Pneumatique (1) selon la revendication 1,
**caractérisé en ce que** les zones évidées (3) sont disposées de manière symétrique autour de la périphérie du pneumatique (1).

3. Pneumatique (1) selon la revendication 1 ou 2,
**caractérisé en ce que** le pneumatique (1) a six zones évidées (3).

4. Pneumatique (1) selon la revendication 1 ou 2,
**caractérisé en ce que** le pneumatique (1) a entre quatre et huit zones évidées (3).

5. Pneumatique (1) selon la revendication 2 ou 3,
**caractérisé en ce que** la circonférence du pneumatique (1) est d'environ 1925 mm, et **en ce que** les parties de bande de roulement (2) entre les zones évidées ont une longueur dans la direction circonférentielle approximativement de 220 mm, et **en ce que** les zones évidées (3) ont une longueur dans la direction circonférentielle approximativement de 110 mm, la différence de hauteur radiale entre la première hauteur de bande de roulement radiale et la seconde hauteur de bande de roulement radiale étant d'environ 6 mm.

6. Pneumatique (1) selon l'une quelconque des revendications 1 à 5,
**caractérisé en ce que** les parties de bande de roulement (2) entre les zones évidées (3) ont une longueur dans la direction circonférentielle approximativement le double de la longueur des zones évidées (3) dans la direction circonférentielle.

7. Pneumatique (1) selon l'une quelconque des revendications 1 à 6,
**caractérisé en ce que** les zones évidées (3) ne comportent pas un motif de bande roulement, tandis que la partie de bande de roulement circonférentielle (2) ayant la première hauteur de bande de roulement radiale comporte un motif de bande de roulement.
